# EUROPEAN PATENT APPLICATION

(11) **EP 1 544 810 A2**
(43) Date of publication of application: **22.06.2005**
(21) Application number: 04257755.1
(22) Date of filing: 14.12.2004
(51) Int. Cl.: G07F 9/10

(54) **Anti-theft device**

(30) Priority: 18.12.2003 GB 0329337
(71) Applicant: Acketts Group Limited, Billericay, Essex CM12 0BT (GB)
(72) Inventor: Acketts, Ronald Lionel, Hockley SS5 4RP Essex (GB)
(74) Representative: Luckhurst, Anthony Henry William

(57) **Abstract**

An anti-theft device 1 for an automated teller machine (A.T.M.) comprises a cross member 33 which is secured to a floor and nuts 49 and bolts 5 for securing the A.T.M. to the cross member 33. Each nut 49 is loosely held in a cage 55 which is attached to a cross member 33 by a clip 61. An A.T.M. which has been placed on the anti-theft device 1 can be levelled by turning adjustment bolts 45 which are screwed into the cross member 33.

## Description

The present invention relates to an anti-theft device which is particularly suited for use with automated teller machines (A.T.M.s).

In GB-A-2 299 619 we describe an anti-theft device which supports an A.T.M. Such a construction is suited to low-level A.T.M. installations in which the base of the A.T.M. is supported very close to the floor. This anti-theft device allows limited movement between the parts of the device which are fitted respectively to the floor and to the A.T.M. This movement is advantageous so that in the event of an attempted theft of the A.T.M., by lassoing for example, the applied force is absorbed by distortion of the supporting frame, allowing the A.T.M. to withstand attack for an extended period of time thereby increasing the likelihood that police forces can arrive at the scene before the A.T.M. is removed.

Difficulties may be encountered when installing the device disclosed in GB-A-2 299 619. Firstly, the A.T.M. is attached to the anti-theft device using bolts which pass through the base of the A.T.M. and engage nuts which are welded to the anti-theft device. The A.T.M. must be located accurately on the anti-theft device to align the bolt holes in the A.T.M. with the nuts on the anti-theft device. This is easier said than done as an A.T.M. typically weighs in excess of one tonne which makes it difficult to move the A.T.M. once lowered onto the supporting frame.

Secondly, when installing an A.T.M., it is important that the A.T.M. is level, particularly as an A.T.M. must often be aligned with another object, for example a hole in a wall, through which the A.T.M. is accessed by a user. To level the cross members of the device disclosed in GB-A-2 299 619, the bolts passing through the upright walls of the brackets must be loosened, the cross members repositioned and the bolts tightened. This can not be done when the A.T.M. has been placed on the anti-theft device as if a bolt is loosened the A.T.M. will drop. This can be inconvenient, particularly if after placing the A.T.M. on the anti-theft device it is found that the A.T.M. is not level, despite best efforts to level the cross members prior to placement of the A.T.M.

A first aspect of the present invention provides a supporting frame for an A.T.M., the supporting frame comprising a cross member which is secured to a floor and securing means for securing the A.T.M. to the cross member, the securing means comprising a plurality of nuts and bolts, each nut being attached to the cross member and movable relative to the cross member.

Preferably the nut is held in a cage which is attached to the cross member by attaching means.

Preferably the attaching means comprises a clip which can fit around the cross member.

Preferably the clip and cage are integrated.

Preferably the clip and cage are formed from a single piece of material.

Preferably each nut is located below the cross member and accessed by the bolt through a hole in the cross member.

A second aspect of the present invention provides a supporting frame for an automated teller machine, the supporting frame comprising levelling means for levelling an A.T.M. which is placed on the supporting frame.

Preferably the levelling means comprises a plurality of bolts which are screwed into the supporting frame and which can be turned to raise or lower the A.T.M.

Preferably a plate is provided between the bolts and the A.T.M. upon which the A.T.M. rests.

A third aspect of the present invention provides a method of installing an A.T.M., the method comprising providing a supporting frame for the A.T.M., the supporting frame comprising levelling means, securing the supporting frame to a floor, placing the A.T.M. on top of the supporting frame, levelling the A.T.M. by adjusting the levelling means and securing the A.T.M. to the supporting frame.

Preferably the levelling means comprises a plurality of bolts which are screwed into the supporting frame, wherein levelling is performed by turning one or more of the bolts to raise or lower the A.T.M.

Preferably the A.T.M. is secured to the supporting frame by placing bolts through holes in a base of the A.T.M. and through holes in the top of the supporting frame to engage nuts which are attached to the supporting frame, wherein when placing the A.T.M. on the supporting frame, it is not necessary to accurately align the holes in the base of the A.T.M. with the holes in the top of the supporting frame.

A further aspect of the present invention provides a supporting frame for an A.T.M., the supporting frame comprising a beam which is securable to a floor and securing means for attaching the A.T.M. to the beam, the securing means comprising first and second fixing members, the first member being movably mounted on the beam and the second member, in use, passing through an aperture in a floor of the A.T.M., whereby the first member is movable into alignment with the aperture to enable the first and second members to be coupled together to secure the A.T.M. to the beam.

A further aspect of the present invention provides a supporting frame for an A.T.M., the supporting frame comprising a plate on which the A.T.M. sits in use, and a beam to which the A.T.M. is attached, wherein the plate is adjustably supported on the beam by adjustment means which is accessible for adjustment when the A.T.M. is on the plate.

The invention will be further described by way of example, with reference to the accompanying drawings, in which:
Figure 1 is a perspective view of an anti-theft device forming an embodiment of the invention;
Figure 2 is a partially exploded perspective view of the embodiment of Figure 1.
Figure 3 is a perspective view of the embodiment of Figure 1 with a lid removed.
Figure 4 is a side view of the embodiment of Figure 1 in direction X, with safe bolts removed.
Figure 5 is a top view of a base frame of the anti-theft device.
Figures 6a and 6b are a top view and a side view respectively of a bracket.
Figure 7 is a top view of a cross member beam.
Figure 8 is a side view of a captive nut assembly and safe bolt.
Figure 9 is a perspective view of a bent plate which forms part of the captive nut assembly.
Figure 10 is a partial cross section view through section Y-Y of Figure 1.

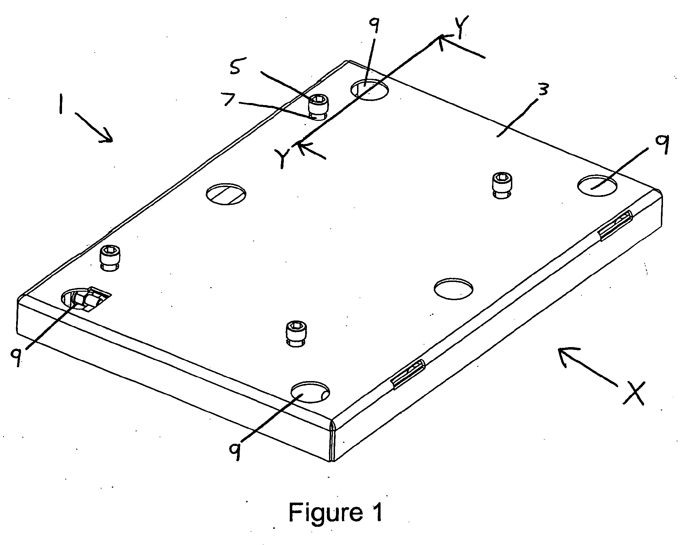

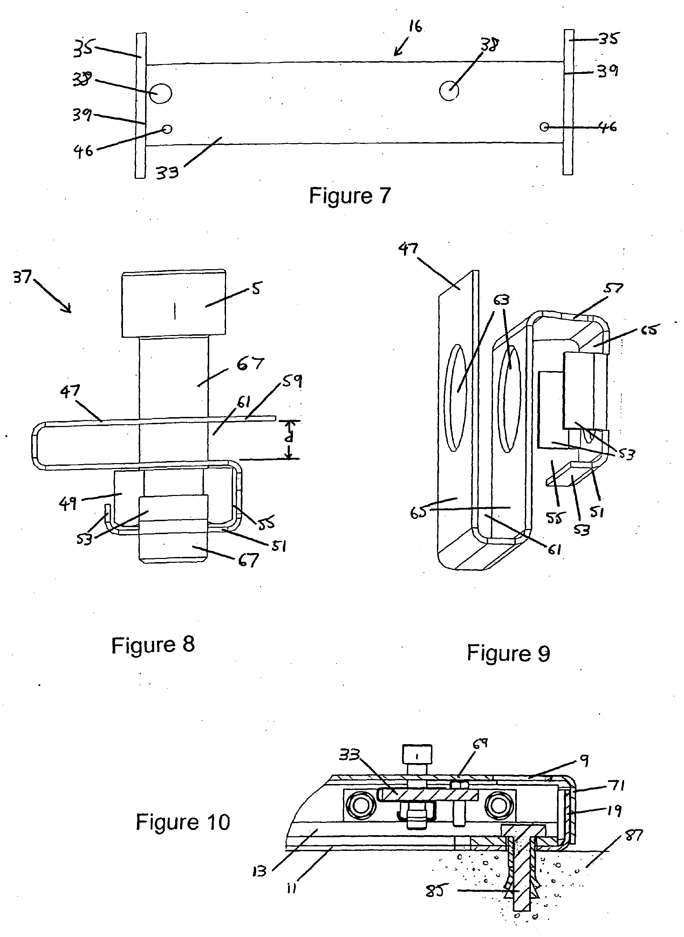

Figure 1 shows an anti-theft device 1 forming an embodiment of the present invention. It can be seen that the anti-theft device 1 has a low profile, which inhibits the leverage that can be applied to an A.T.M. fitted to the anti-theft device in an attempted theft. The anti-theft device 1 is preferably available in a number of variants of different height, the height of each variant being adjustable over a specified height range. The variants preferably have height ranges of 75-110mm, 110-185mm, 185-300mm and 300-500mm, the choice of variant being determined by factors such as the height of the A.T.M. and the height of the surface on which the anti-theft device is mounted relative to street level. The lid 3 of the anti-theft device 1 is in place and most of the components are obscured from view, but will be shown in the following figures. An A.T.M. can be attached to the anti-theft device 1 by means of four safe bolts 5 which are fed through holes in the base of the A.T.M. and through holes 7 in the lid 3 of the anti-theft device 1. When the anti-theft device 1 is installed, it is fitted as a single unit as shown in this figure, with the exception of the four bolts 5 which are removed prior to placing the A.T.M. onto the lid 3 of the anti-theft device 1. Six access holes 9 are located in the lid 3 of the anti-theft device 1, through which expanding bolts 85 are inserted to attach the anti-theft device 1 to the ground 87, as shown in Figure 10.

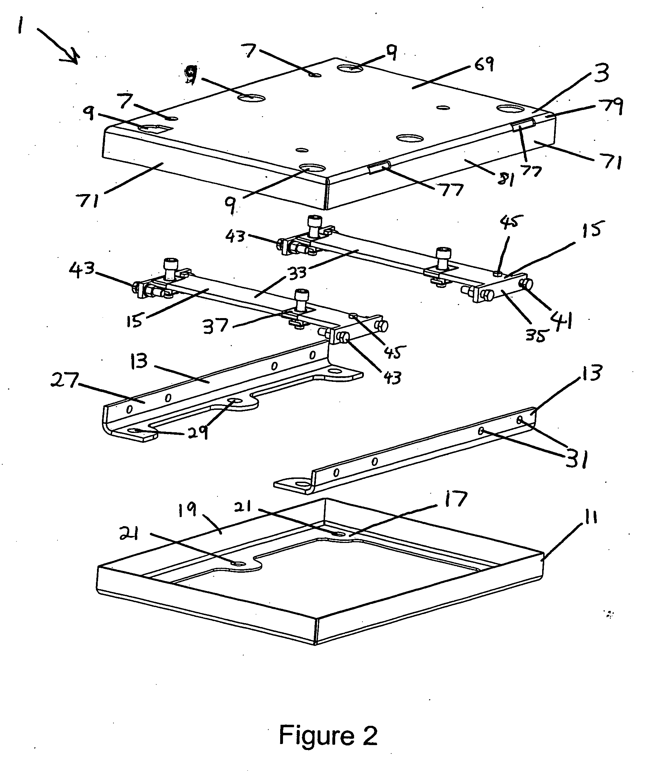

Figure 2 is a partially exploded perspective view of the embodiment of Figure 1. The anti-theft device 1 is comprised of a base frame 11, two brackets 13, two cross member assemblies 15 and a lid 3.

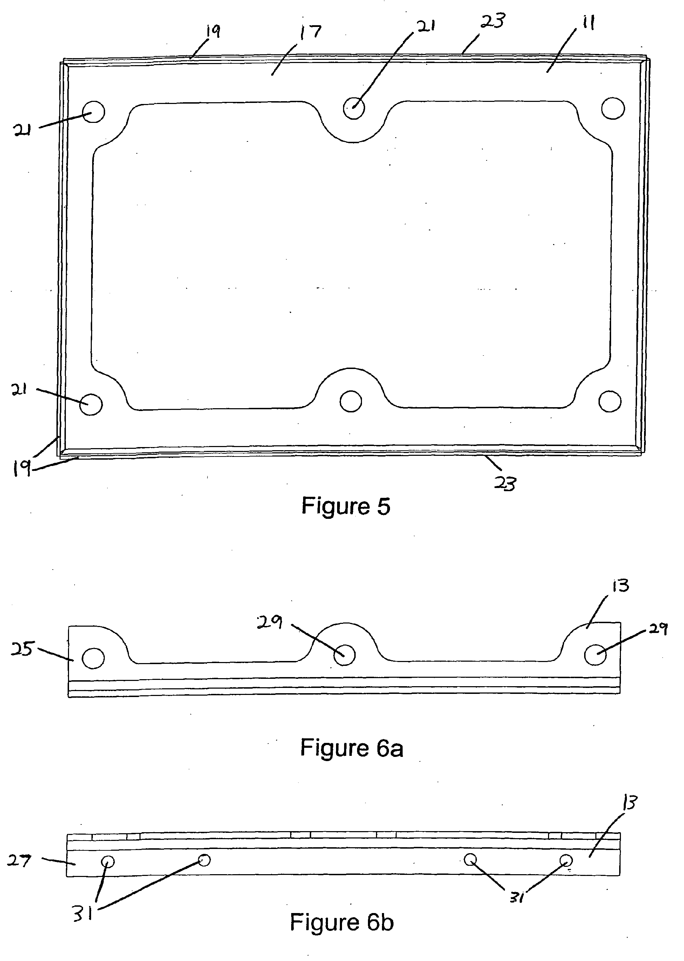

A top view of the base frame 11 is shown in Figure 5. The base frame 11 is rectangular and has a bottom portion 17 and four peripheral flanges 19. The four peripheral flanges 19 project upwards from the bottom portion 17 an equal amount. There are six holes 21 in the bottom portion 17, three holes 21 along each of the longer sides 23 of the base frame 11. The base frame 11 is formed from 8mm mild steel sheet by cutting the appropriate shape and folding the four edges to form the four peripheral flanges 19.

A top view and a side view of a bracket 13 are shown in Figures 6a and 6b respectively. Each bracket 13 has a bottom portion 25 and a side portion 27. There are three holes 29 in the bottom portion 25, which align with the three holes 21 along the longer sides 23 of the base frame 11. There are two pairs of holes 31 in the side portion 27. The brackets 13 are formed by cutting and folding 10mm mild steel.

A top view of a cross member beam 16 is shown in Figure 7. The cross member beam 16 is comprised of a cross member 33 and two end plates 35. Two captive nut assemblies 37 and two adjustment bolts 45 are fitted to each cross member beam 16 to form a cross member assembly 15. The cross member 33 is made of 20mm mild steel. The end plates 35 are welded to the ends 39 of the cross member 33. There are two holes 41 in each end plate 35 which align with the holes 31 in the side portion 27 of the brackets 13.

An adjustment bolt hole 46 and a safe bolt hole 38 are located towards each end 39 of the cross member 33. The adjustment bolt hole 46 is threaded, so that as the adjustment bolt 45 is turned, it moves into or out of the cross member 33.

The captive nut assembly 37 is comprised of a bent plate 47 and a nut 49. A side view of the captive nut assembly 37 and safe bolt 5 is shown in Figure 8 and a perspective view of the bent plate 47 is shown in Figure 9. The bent plate 47 is bent into an 's' shape to form a cage portion 55 and a clip portion 61. The end 51 of the bent plate 47 forming the cage portion 55 is further bent inwards on three sides to form lips 53. The nut 49 is loosely held within the cage 55 formed by the lips 53 and the 'u' shaped portion 57 of the end 51 of the bent plate 47, so that limited movement of the nut 49 relative to the bent plate 47 is possible, without the nut 49 becoming separated from the bent plate 47 and without the nut 49 being able to rotate within the cage portion 55. The other end 59 of the bent plate 47 forms a second 'u' shaped clip portion 61. There is a hole 63 in each of the three parallel portions 65 of the bent plate 47. The three holes 63 are coaxially aligned so that the shaft 67 of a safe bolt 5 can pass through the holes 63, as shown in Figure 8. To fit the captive nut assembly 37 to the cross member 33, the cross member 33 slides into the clip portion 61 of the bent plate 47, the depth d of the clip 61 being substantially the same as the thickness, 20mm, of the cross member 33, so that the holes 63 in the bent plate 47 are aligned with the safe bolt hole 38 in the cross member 33. The bent plate 47 is typically made from a single piece of metal, but other material such as a polymer may be used.

Referring to Figure 2, the lid 3 is comprised of a top portion 69 and four peripheral flanges 71. The lid 3 is made from 8mm mild steel. The lid 3 fits on top of the base frame 11 so that the peripheral flanges 71 of the lid 3 overlap the peripheral flanges 19 of the base frame 11. There are six holes 9 in the top portion 69 of the lid 3 which are aligned with the holes 21 in the bottom portion 17 of the base frame 11. There are a further four holes 7 in the top portion 69 of the lid 3 through which the safe bolts 5 are inserted to engage the safe bolt nuts 49 which are suspended below the cross members 33. There are two slots 77 at the top 79 of each of the long sides 81 of the lid 3, to access the adjustment bolts 45, as will described below.

To install the anti-theft device 1 the cross member assemblies 15 are attached with eight bolts 43 to the two brackets 13, the bolts 43 passing through the holes 41 in the end plates 35 and the holes 31 in the side portion 27 of the brackets 13. The brackets 13 are placed into the base frame 11, the holes 29 in the bottom portion 25 of the brackets 13 being aligned with the holes 21 in the bottom portion 17 of the base frame 11. In this manner the bolts 43 which attach the cross member assemblies 15 to the brackets 13 are concealed by the peripheral flanges 19 of the base frame 11. Four adjustment bolts 45 are inserted into the adjustment bolt holes 46. The lid 3 is placed on the base frame 11. The peripheral flanges 71 of the lid 3 overlap the peripheral flanges 19 of the base frame 11 to provide additional protection to the side of the anti-theft device 1 in the event of attack by a fork lift truck, for example. Expanding bolts 85 are inserted through the six holes 9 in the top portion 69 of the lid 3 to attach the brackets 13 and base frame 11 to the floor 87, as shown in Figure 10.

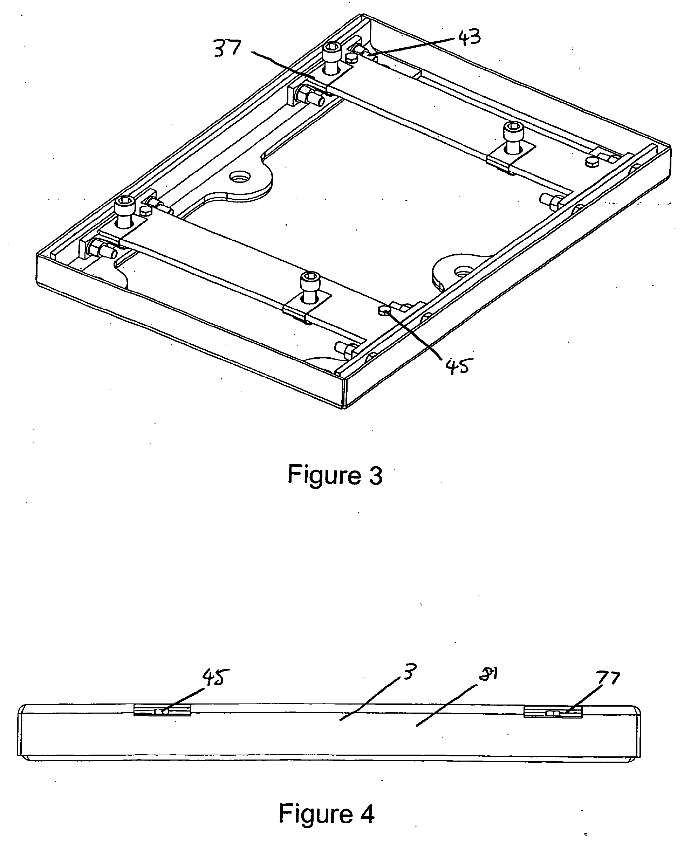

An A.T.M. is lowered onto the lid 3 of the anti-theft device 1. Holes in the base of the A.T.M. are aligned with the four holes 7 in the lid 3 of the anti-theft device 1. It is not necessary to accurately align the holes as will be explained below. The A.T.M. is levelled by turning one or more of the four adjustment bolts 45 to lift or lower the lid 3, as required. The adjustment bolts 45 are accessed via the slots 77 in the sides 81 of the lid 3 as shown in Figure 4. Levelling the A.T.M. in this manner can be done when the A.T.M. is on top of the anti-theft device 1.

The four safe bolts 5 are inserted through holes in the base of the A.T.M. to pass through the four holes 7 in the lid 3 of the anti-theft device 1 and to pass through the four holes 38 in the cross member 33. The holes 7, 38 in the lid 3 and in the cross member 33 are significantly larger than the diameter of the shaft 67 of the safe bolt 5, to allow lateral movement of the safe bolt 5 and the captive nut assembly 37 when aligning the safe bolt 5 with the nut 49. The safe bolts 5 engage the nuts 49 which are loosely held within the captive nut assembly 37. As the nuts 49 have a limited degree of movement, it is not necessary to accurately align the holes in the base of the A.T.M. with the holes 7 in the lid 3 of the anti-theft device 1, which greatly eases installation of the A.T.M. on the anti-theft device 1.

Various modifications will be apparent to those in the art and it is desired to include all such modifications as fall within the scope of the accompanying claims.

## Claims

1. A supporting frame for an automated teller machine (A.T.M.), the supporting frame comprising a cross member which is secured to a floor and securing means for securing the A.T.M. to the cross member, the securing means comprising a plurality of nuts and bolts, each nut being attached to the cross member and movable relative to the cross member a clip which fits around the cross member.

2. A supporting frame as claimed in claim 1, wherein each nut is held in a cage which is attached to the cross member by a clip which fits around an edge of the cross member.

3. A supporting frame as claimed in claim 2, wherein the clip and cage are integrated.

4. A supporting frame as claimed in claim 1, 2 or 3, wherein each nut is located below the cross member and accessed by the bolt through a hole in the cross member.

5. A supporting frame as claimed in any one of claims 1 to 4, further comprising levelling means for levelling an A.T.M. which is placed on the supporting frame.

6. A supporting frame as claimed in claim 5, wherein the levelling means comprises a plurality of bolts which are screwed into the supporting frame and a plate is provided between the bolts and the A.T.M. upon which plate the A.T.M. rests, the bolts being turned to raise or lower the plate and A.T.M.

7. A method of installing an automated teller machine (A.T.M.), the method comprising providing a supporting frame for the A.T.M., the supporting frame comprising levelling means, securing the supporting frame to a floor, placing the A.T.M. on top of the supporting frame, levelling the A.T.M. by adjusting the levelling means with the A.T.M. on the supporting frame and securing the A.T.M. to the supporting frame.

8. A method of installing an A.T.M. as claimed in claim 7, wherein the levelling means comprises a plurality of bolts which are screwed into the supporting frame, wherein levelling is performed by turning one or more of the bolts to raise or lower the A.T.M.

9. A method of installing an A.T.M. as claimed in claim 7 or 8, wherein the A.T.M. is secured to the supporting frame by placing bolts through holes in a base of the A.T.M. and through holes in the top of the supporting frame to engage nuts which are attached to the supporting frame, wherein when placing the A.T.M. on the supporting frame, it is not necessary to accurately align the holes in the base of the A.T.M. with the holes in the top of the supporting frame.

10. A supporting frame for an automated teller machine (A.T.M.), the supporting frame comprising a beam which is securable to a floor and securing means for attaching the A.T.M. to the beam, the securing means comprising first and second fixing members, the first member being movably mounted on the beam and the second member, in use, passing through an aperture in a floor of the A.T.M., whereby the first member is movable into alignment with the aperture to enable the first and second members to be coupled together to secure the A.T.M. to the beam.

11. A supporting frame for an automated teller machine (A.T.M.), the supporting frame comprising a plate on which the A.T.M. sits in use, and a beam to which the A.T.M. is attached, wherein the plate is adjustably supported on the beam by adjustment means which is accessible for adjustment when the A.T.M. is on the plate.

12. A supporting frame for an automated teller machine (A.T.M.), the supporting frame comprising a pair of brackets (13) which are secured, in use, to a floor, a pair of cross members (15) extending between the brackets (13) and secured at each end to a respective bracket, a cover (3) having a top (69) and sides (81) and which overlays the brackets (13) and cross members (15) and is supported on screws (45) which are threadedly mounted in the cross members (15), the screws (45) being adjustable through apertures (77) at the sides of the cover to raise or lower the cover, and captive nuts mounted underneath apertures in the cross members and cover to receive bolts (5) for securing an A.T.M. to the frame.
